# EUROPEAN PATENT SPECIFICATION

(11) **EP 0 495 680 B1**
(45) Date of publication and mention of the grant of the patent: **02.12.1998**
(21) Application number: 92300439.4
(22) Date of filing: 17.01.1992
(51) Int. Cl.: G06F 5/00, H04N 9/80, H04N 5/76, G11B 20/12

(54) **Image processing apparatus and method**
Bildverarbeitungsgerät und Bildverarbeitungsverfahren
Appareil et méthode de traitement d'image

(30) Priority: 18.01.1991 JP 4317/91; 18.01.1991 JP 4318/91; 18.01.1991 JP 4319/91
(43) Date of publication of application: 22.07.1992
(73) Proprietor: CANON KABUSHIKI KAISHA, Tokyo (JP)
(72) Inventor: Ishii, Yoshiki, Canon Kabushiki Kaisha, Tokyo (JP); Shimokoriyama, Makoto, Canon Kabushiki Kaisha, Tokyo (JP); Shimizu, Tetsuya, Canon Kabushiki Kaisha, Tokyo (JP); Karasawa, Katsumi, Canon Kabushiki Kaisha, Tokyo (JP)
(74) Representative: Beresford, Keith Denis Lewis

(56) References cited:
- EP-A- 84 950
- PATENT ABSTRACTS OF JAPAN vol. 13, no. 001 (P-808)6 January 1989 & JP-A-63 211 019 ( HITACHI LTD ) 1 September 1988
- IEEE TRANSACTIONS ON CONSUMER ELECTRONICS vol. 35, no. 3, August 1989, NEW YORK pages 450 - 457; YAMAMITSU ET AL.: 'An experimental study for a home-use digital vtr'

## Description

The present invention relates to an image processing apparatus capable of digital data format conversion between a first format, for example for image display, and a second format, for example for recording on a recording medium.

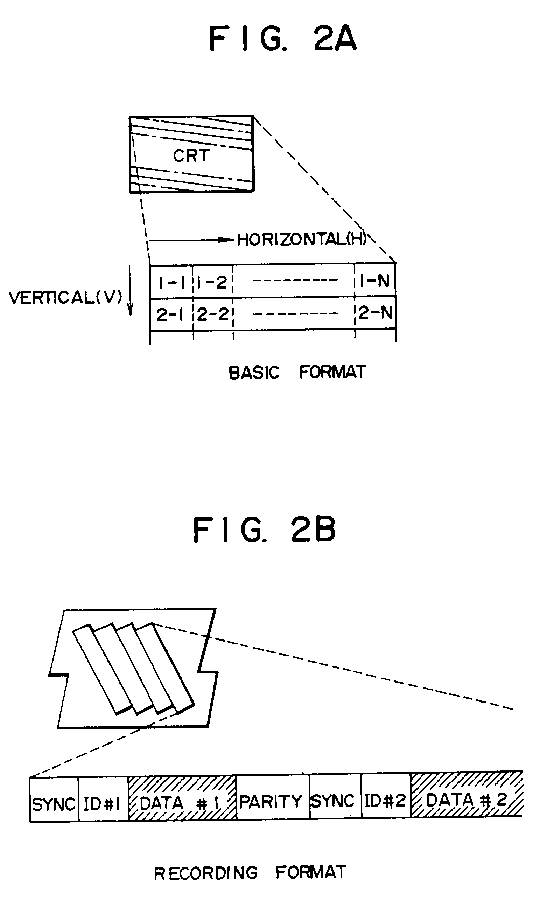

There are recently developed apparatus capable of transmission or recording/reproduction of image data in digital form, thereby realizing image transmission without deterioration in S/N ratio, or image recording and reproduction without time-dependent deterioration. Such digital image processing apparatus is usually equipped with a data memory capable of storing at least one frame of image data to be handled or processed. The image data may be handled in various formats, such as a display format (or standard input/output format) in which the pixel signals (and image synchronization signals) are aligned in the sequence along the scanning direction, as in the output signals for a monitor or in the input signals from a camera, a recording format for a magnetic recording medium, or a transmission format according to the protocol specific to each communication channel. In the transmission or recording of an image, the data are shuffled and subjected to the addition of error correction codes. Also there are added a synchronization code SYNC and an identification code ID to each data block. Fig. 2(A) illustrates a basic format in which the pixel data are arranged in the order of horizontal and vertical scannings, and Fig. 2B illustrates a recording format on a magnetic tape in a digital VCR. The basic format shown in Fig. 2A corresponds to the horizontal and vertical scans in an image monitor.

Also the digital image processing apparatus is usually equipped with a data memory for temporarily storing the image data to be processed. Conventional digital image processing apparatus employs a circuit structure in which various circuit blocks such as input/output circuit, record/reproducing circuit, data memory etc. are combined through a bus, in order to enable common use of the data memory, thereby reducing the magnitude of hardware. A typical example of such digital image processing apparatus is the digital video cassette recorder (VCR).

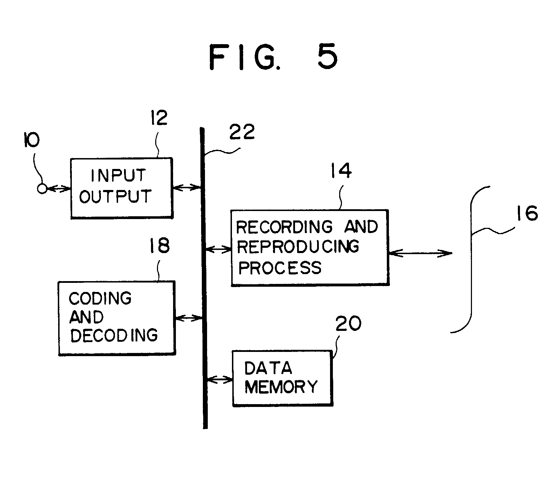

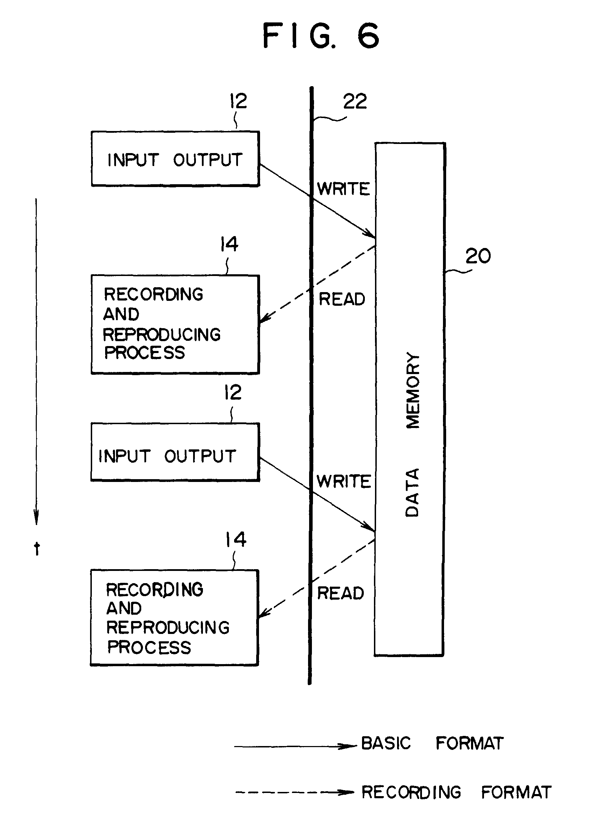

Fig. 5 is a block diagram showing the basic structure of a conventional digital VCR, in which are shown an input/output terminal 10 to be connected to a transmission channel such as a public telephone network or a digital network, a television camera, an image monitor or a transmission interface; an input/output circuit 12 composed of an A/D converter, a D/A converter, an interface circuit etc.; a record/reproducing circuit 14 for effecting digital recording of the image data on a magnetic tape 16 and reproduction of the signal recording on said magnetic tape 16; an encoding/decoding circuit 18 for effecting error correction encoding and decoding related to recording/reproduction; a data memory 20 utilized in the recording and reproduction by the record/reproducing circuit 14; error correction encoding and decoding by the encoding/decoding circuit 18, and input/output process by the input/output circuit 12; and a data bus for mutually connecting the circuits 12, 14, 18 and 20. The data flow in the above-explained configuration is shown in Fig. 6.

The above-explained conventional configuration is incapable, as will be apparent from Fig. 6, of effecting the writing and reading of the data memory through a same data bus at the same time, and is therefore associated with a drawback of a high access rate of the data bus and the data memory because of frequency writing and reading operations. In particular, a higher processing speed is required in case of real-time processing of the video signal.

Besides, if the writing and reading of a same data memory are conducted with different formats, such as the basic format and the recording format, there is inevitably required complex administration or control for said data memory. For simplifying such administration or control, an address generating circuit corresponding to the employed format has to be provided for each of the circuits connected to the data bus, so that the magnitude of the circuitry becomes inevitably large.

Furthermore, a configuration in which a data memory is commonly used through one or two data buses as in the conventional structure explained above, is associated with a drawback of an elevated access rate of the data bus and the data memory and an increased burden on the hardware, if there is required an image processing with a sequence of pixels different from that in the recording format or in the display (or transmission) format, for example encoding and decoding of the image data.

In addition, in recent years, the requirement for higher image quality necessitates a larger amount of data to be processed, and a faster data processing in the system is longed for because of an increase in the sampling rate.

JP-A-63211019 discloses a first memory for storing data in a first format, a second memory for storing data in a second format and processing means for converting data between the first and second formats as data is transferred between the memories.

According to one of aspect the present invention provides an image data processing apparatus comprising:
a first memory for storing image data according to a first format; and
a second memory for storing image data according to a second format different from the first format;
characterized by
a first bus connected to said first memory, for passing the image data according to the first format therethrough to and from said first memory;
a second bus connected to said second memory for passing the image data according to the second format therethrough to and from said second memory;
processing means for converting the image data according to the first format stored in the first memory into the second format, for coding the converted image data, and for transferring the coded converted image data into said second memory, wherein said processing means is arranged to not access said first and second memories via said first and second busses.

According to a second aspect the present invention provides an image data processing method comprising the steps of:
storing image data according to a first format in a first memory through a first bus connected to said first memory;
reading the image data from the first memory;
converting the image data according to the first format stored in said first memory into a second format;
coding the converted image data;
storing the coded converted image data according to the second format in a second memory; and
reading the image data according to the second format from said second memory through a second bus connected to said second memory wherein the first reading step, the converting step, the coding step and the storing step do not access said first and second busses.

Embodiments of the present invention will now be described with reference to the accompanying drawings, in which:
Fig. 1 is a block diagram showing the basic structure of an image processing apparatus;
Figs. 2A and 2B are views showing two examples of transmission format;
Fig. 3 is a schematic block diagram of a digital VCR incorporating the arrangement shown in Fig. 1;
Fig. 4 is a view showing the data flow in a recording operation of the digital VCR shown in Fig. 3;
Fig. 5 is a block diagram of a conventional configuration;
Fig. 6 is a view showing the data flow in said conventional configuration;
Fig. 7 is a block diagram showing the basic structure of an image processing apparatus;
Fig. 8 is a schematic block diagram of a digital VCR incorporating the 7;
Fig. 9 is a view showing the data flow in a recording operation of the digital VCR shown in Fig. 7;
Fig. 10 is a block diagram of a variation of the arrangement shown in Fig. 7;
Fig. 11 is a schematic block diagram of an embodiment of the present invention; and
Figs. 12A and 12B are views showing two Transmission formats employed in the embodiment shown in Fig. 11.

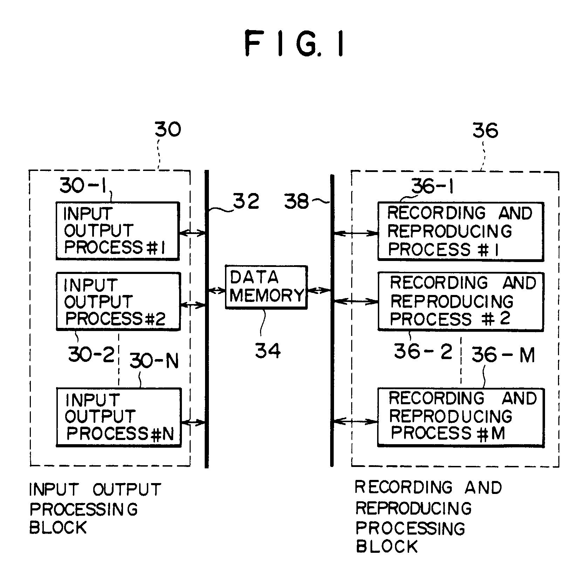

Fig. 1 is a block diagram showing the basic configuration of an image processing apparatus,

applied to a digital video cassette recorder. An input/output process block 30 is composed of at least one circuit 30-1, 30-2, ..., 30-N for image data processing in the basic format, in which said circuit 30-1, 30-2, ..., 30-N are connected to a data memory through a common data bus 32. Thus said block 30 can write data into or read data from the data memory 34 through the data bus 32, in the sequence of the image data of the input/output format.

A recording/reproducing process block 36 is composed of at least one circuit 36-1, 36-2, ..., 36-M for image data recording and reproduction in the recording format, and is connected to the data memory through a data bus 38. Thus said block 36 can write data into and read data from the data memory 34 through the data bus 38, in the sequence of data of the recording format.

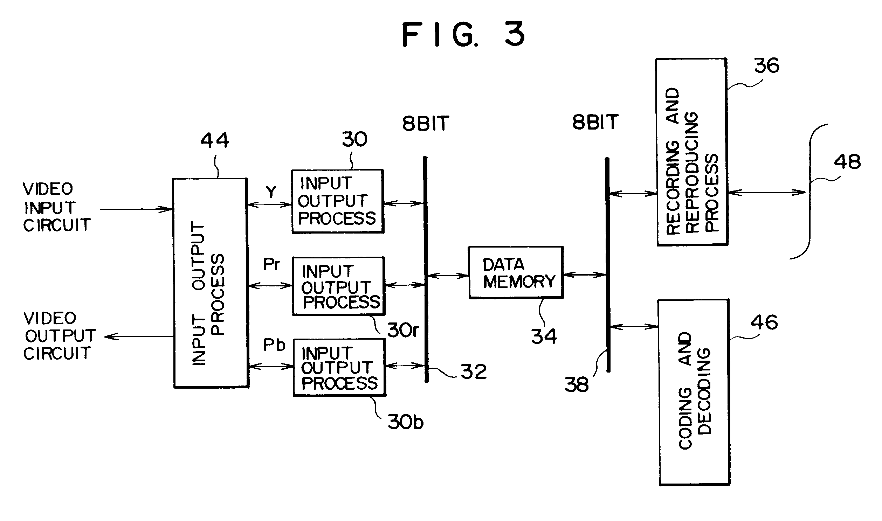

Fig. 3 is a block diagram showing the basic configuration of a digital VCR in which the arrangement shown in Fig. 1 is applied, wherein same components as those in Fig. 1 are represented by same numbers. An input/output process circuit 44 is adapted to convert an input video signal into a luminance signal Y and color signals Pr, Pb, and to convert input Y, Pb, Pr signals for example into a signal suitable for monitor display. Another input/output process circuit processes the luminance signal Y, while other input/ output process circuits 30r, 30b respectively process the color signals Pr, Pb. There are also shown an error correction encoding/decoding circuit 46 for correcting the errors involved in the recording and reproduction, and a magnetic tape 48 constituting a recording medium.

At the recording, the luminance signal and color signals in analog form, supplied from the input/output process circuit 44, are converted into digital form and encoded respectively by the input/output process circuits 30, 30r, 30b. The digital output signals of said circuits are recorded in the data memory 34 through the data bus 32, in the sequence of the basic format. At the recording in the data memory 34, data shuffling is executed if required.

The encoding/decoding circuit 46 makes access to the data memory 34 through the data bus 38, and effects error correction encoding on said data memory 34. After said error correction encoding, the recording/reproduction process circuit 36 reads the data from the data memory in the data sequence of recording format, then adds a synchronization code SYNC and an identification code ID, effects predetermined modulation and records the data on the magnetic tape 48.

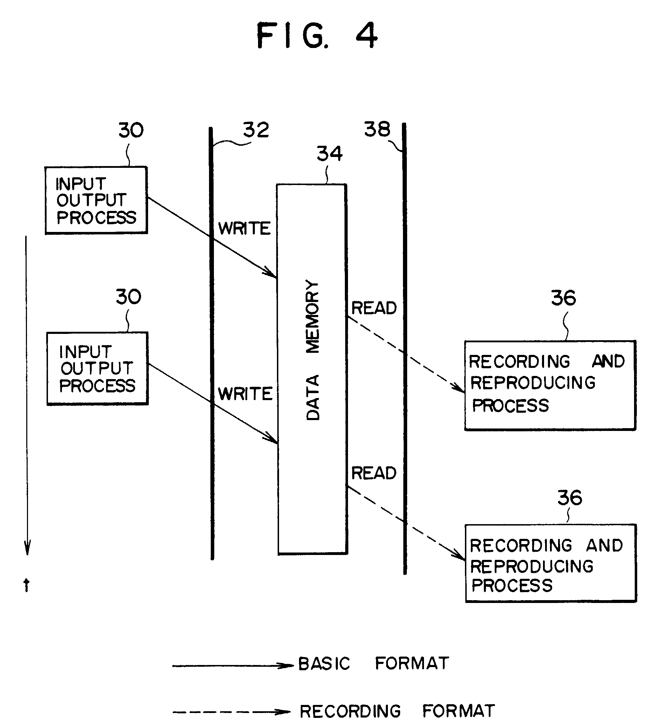

Fig. 4 shows the format of the data from the input/output process circuits 30, 30r, 30b through the data bus 32 to the data memory 34 and that from the data memory 34 through the data bus 38 to the record/reproduction process circuit 36 in relation to time t. In this arrangement the input/ output process circuit 30 and the circuits 30r, 30b have different data input/output rates according to the difference in signal bandwidth, in order to facilitate the data writing into the memory through the data bus 32.

The reproducing operation is conducted in the following manner. The record/reproducing process circuit 36 effects a reproduction process, according to the recording format, on the data reproduced from the magentic tape 46, and, according to the synchronization code SYNC and identification code ID of said data, writes the reproduced data into the data memory 34 through the data bus 38. The encoding/decoding circuit 46 makes access to the data memory 34 through the data bus 38 and effects error correction on the data memory 34, by the error correction code applied at the recording. If the data shuffling is conducted at the recording, a deshuffling is conducted on the data memory 34 by address handling. Subsequently the image data, stored in the data memory 34, are read to the data bus 32 in the data sequence of the basic format, then converted into an analog signal by the input/output circuit 30 and released through the input/ output circuit 44 to an external monitor or the like.

As will be apparent from the comparison of the data flow of this arrangement shown in Fig. 4 and that of the conventional configuration shown in Fig. 6, the access rate in the buses 32, 38 of this arrangement can be made lower than that in the conventional bus 22. Also the memory address control can be simplified, since the data in each bus have a unified format.

Although the foregoing description has been limited to the digital VCR, this arrangement is likewise applicable to an optical file system or a data transmission apparatus.

As will be easily understood from the foregoing, this arrangement allows a reduction in the access rate to the memory or to the data bus, thereby easily realizing an image processing apparatus capable of real-time processing. Also since the data in each bus have a unified format, the address control of memory can be simplified, and the magnitude of the circuits can be reduced.

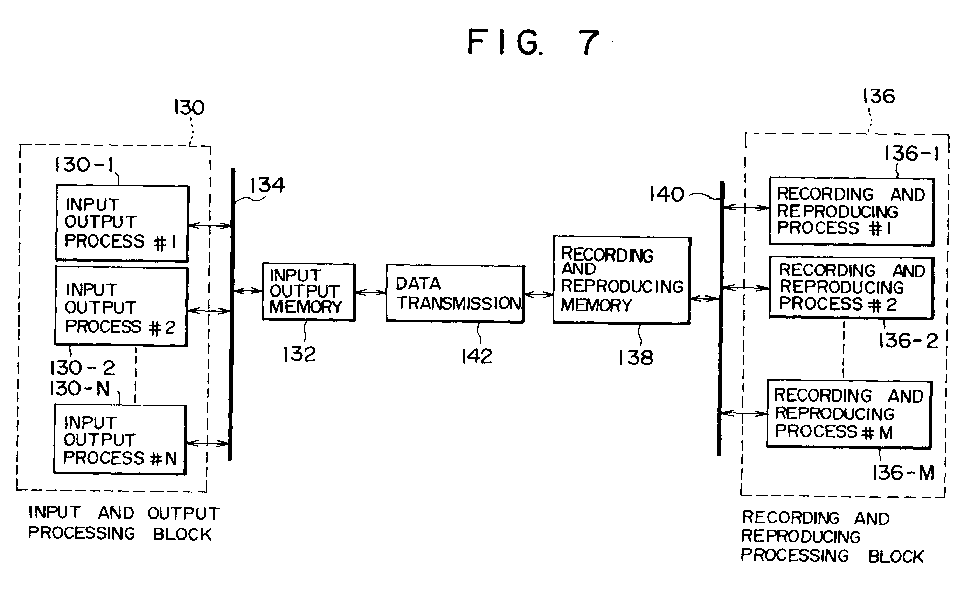

Fig. 7 is a block diagram showing the basic structure of an image processing apparatus applied to a digital VCR. An input/output process block 130 is composed of plural circuits 130-1, 130-2, ..., 130-N for processing image data with the basic format. An input/output memory 32 for effecting input/output of data in the basic format with said input/output process block 130 through a data bus 134, connecting the circuits 130-1, 130-2, ..., 130-N of the input/output process block 130 with the input/output memory 132.

A record/reproducing process block 136 is composed of plural circuits 136-1, 136-2, ..., 136-M for effecting record/reproducing of image data in the recording format. A record/reproducing memory 138 effects input/output of the data in the recording format with said record/reproducing process block 136 through a data bus 140, connecting the circuits 136-1, 136-2, ..., 136-M of said block 136 with the record/reproducing memory 138.

The input/output memory 132 and the record/reproducing memory 138 are connected by a data transfer circuit 142, which generates readout addresses for the input/output memory 132 and write-in addresses for the record/reproducing memory 138 in mutually related manner thereby transferring the data from the input/output memory 132 to the record/reproducing memory 138 and storing said data in said memory 138 in the recording format, and generates read-out addresses for the record/reproducing memory 138 and write-in addresses for the input/output memory 132 in mutually related manner thereby transferring the data from the record/reproducing memory 138 to the input/output memory 132 and storing said data in said memory 132 in the basic format. The format conversion is conducted in this manner. Said recording format and basic format are mutually related as shown in Figs. 2A and 2B.

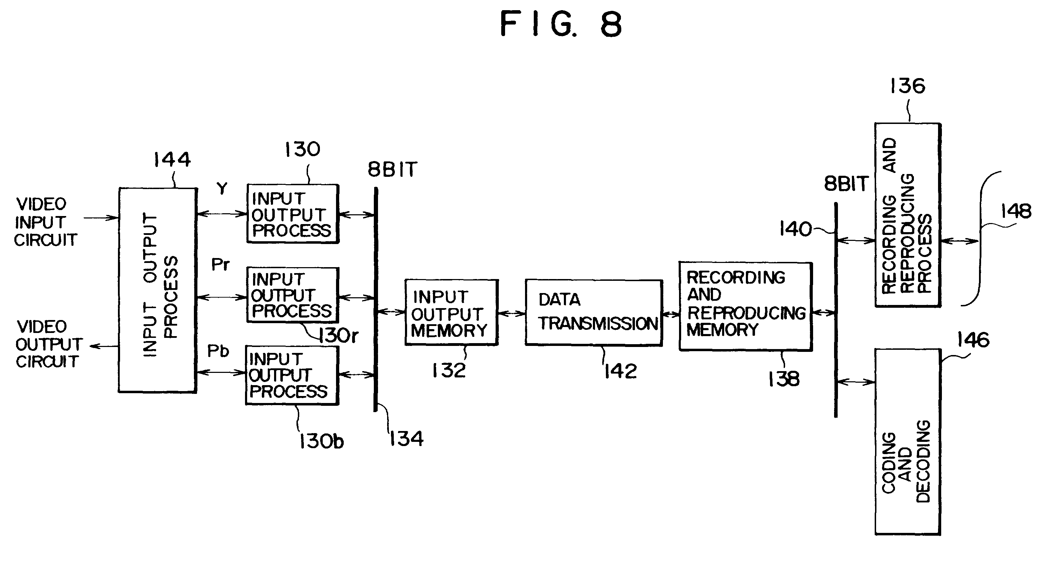

Fig. 8 is a block diagram showing the basic configuration of a digital VCR in which the arrangement shown in Fig. 7 is applied, wherein same components as those in Fig. 7 are represented by same numbers. There are also shown input/output process circuits 130r, 130b for effecting input/output process on color signals; an input/output process circuit 144 for converting an input video signal into a luminance signal Y and color signals Pr, Pb and for converting input Y, Pb, Pr signal into a signal for example suitable for monitor display; an error correction encoding/decoding circuit 146 for correcting the errors involved in the recording and reproduction; and a magnetic tape 148 constituting a recording medium.

In the recording operation, the luminance signal Y and color signals Pr, Pb in analog form, released from the input/output process circuit 144, are converted into digital form and encoded respectively by the input/output process circuits 130, 130r, 130b, of which digital output is recorded in the input/output memory 132 through the data bus 134, in the data sequence of the basic format. Data shuffling is conducted on the input/output memory 132, if necessary. Then, at a predetermined timing, the data transfer circuit 142 reads the data stored in the input/output memory 132 and transfers said data to the record/reproducing memory 138, in which said data are stored in the data sequence of the recording format.

The encoding/decoding circuit 146 makes access to the record/reproducing memory 138 through the data bus 140 and effects error correction encoding on the memory 138. After said error correction encoding, the record/reproducing process circuit 136 reads the data from the record/reproducing memory 138 in the data sequence of the recording format, then adds a synchronization code SYNC and an identification code ID, effects a predetermined modulation and records the data in the magnetic tape 148.

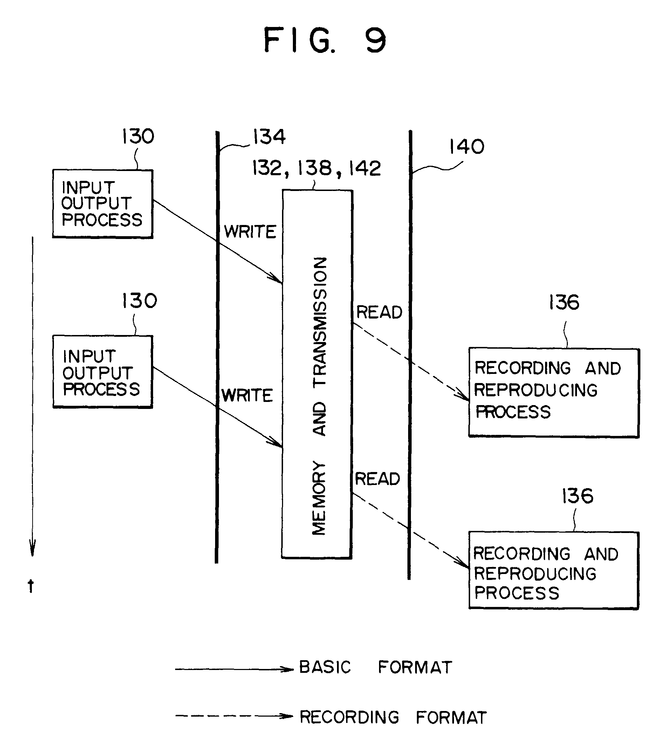

Fig. 9 shows the format of the data from the input/output process circuits 130, 130r, 130b to the data bus 134 and that from the data bus 140 to the record/reproducing process circuit 136, in relation to time t. In the present embodiment, the input/ output process circuit 130 and the circuits 130r, 130b have different data input/output rates according to the difference in signal bandwidth. More specifically, the luminance signal has a wider signal bandwidth than that of the Pr, Pb signals. This fact facilitates the data writing into the memory through the data bus 134.

The reproducing operation is conducted in the following manner. The record/reproducing process circuit 136 effects a reproduction process, according to the recording format, on the data reproduced from the magnetic tape 148, and, according to the synchronization code SYNC and identification code ID of said data, writes the reproduced data into the record/reproducing memory 138 through the data bus 140. The encoding/decoding circuit 146 makes access to the record/reproducing memory 138 through the data bus 140 and effects error correction on said memory 138, by the error correction code applied at the recording. Then the data transfer circuit 142 reads the data present in the record/reproducing memory 138 and stores said data in the input/output memory 132 in the basic format. If data shuffling is conducted at the recording, the data are stored in the input/output memory 132 in the shuffled data sequence, and are converted into the basic format by address operations. Otherwise said data are read in the basic format at the read-out operation to the data bus 134. Subsequently the image data stored in the input/output memory 132 are read to the data bus 134 in the data sequence of the basic format, then converted into an analog signal by the input/output circuit 130 and supplied through the input/output circuit 144 to an external monitor or the like.

As will be apparent from the comparison of the data flow in Fig. 9 and that of the conventional configuration shown in Fig. 6, the access rate in the buses 134, 140 of the present embodiment can be made lower than that in the conventional bus 22. Also the memory address control can be simplified, since the data in each bus have a unified format.

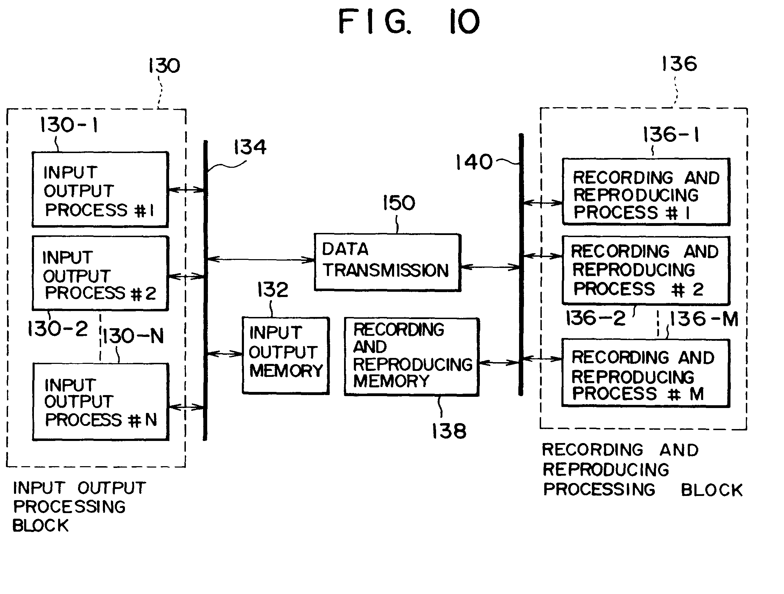

In the arrangement shown in Figs. 7 and 8, the data transfer circuit 142 is provided between two memories 132, 138, but said data transfer circuit may be provided between the buses 134, 140. Fig. 10 is a block diagram of such variation, in which same components as those in Fig. 7 are represented by same numbers. In this variation, a data transfer circuit 150 makes access to the input/output memory 132 through the data bus 134 and to the record/reproducing memory 138 through the data bus 140, and effects format conversion by data transfer from the memory 132 to 138 or from 138 to 132.

Also the configuration shown in Fig. 10 allows to reduce the access rates for the memory and bus and to simplify the memory address control. It is also possible, as a mixture of the configurations shown in Figs. 7 and 10, to connect the data transfer circuit to one of the memories 132, 138 through the bus and directly to the other.

Though the foregoing arrangement has been limited to a digital image recording apparatus, the arrangement is not limited to such and is likewise applicable to other apparatus such as an optical filing apparatus or an image transmission apparatus.

As will be easily understood from the foregoing description, the arrangement allows to reduce the access rate of the memories and data buses. Also since the data in each bus have a unified format, there is obtained an advantage of simplifying the memory address control and thereby reducing the magnitude of circuitry.

### [Embodiment of the present invention]

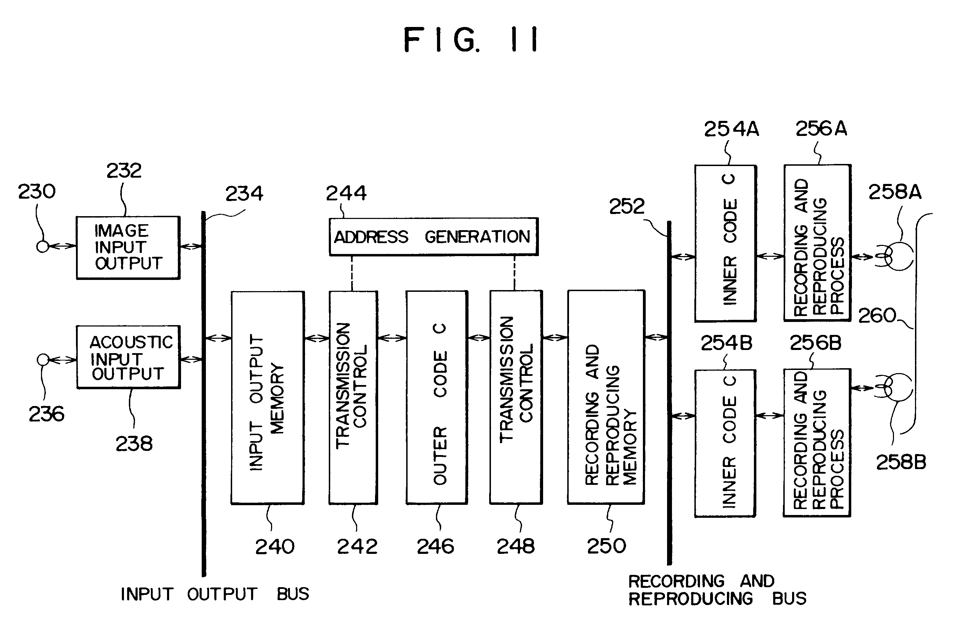

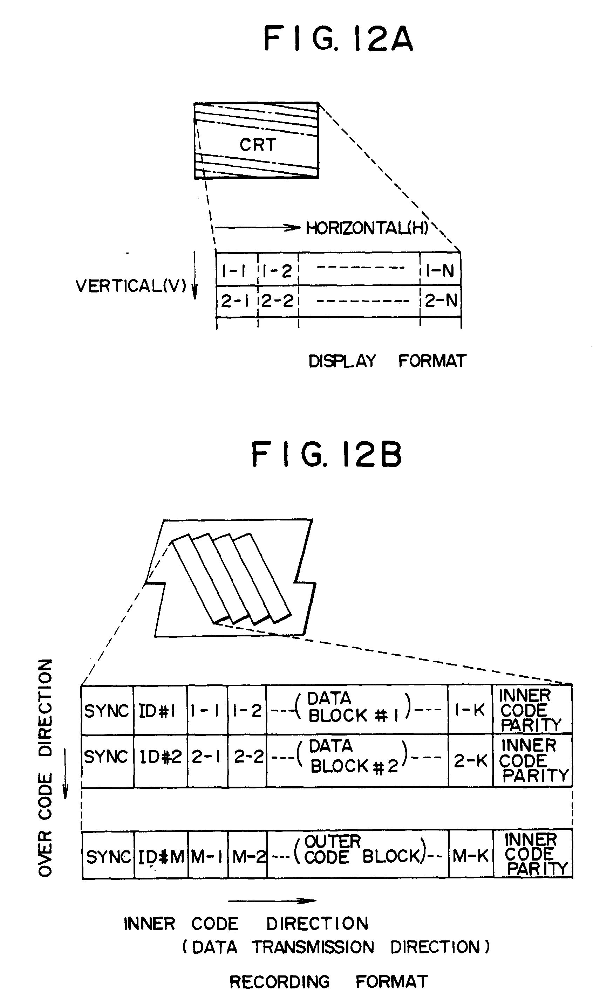

Fig. 11 is a block diagram showing the basic structure of an embodiment of the present invention, applied to a digital VCR. In the present embodiment, as shown in Fig. 12B, an inner code is added to the data of a track in the recording format on the magnetic tape, in the recording direction of said data, and an outer code is added in the perpendicular direction.

An analog image signal, entering from an image input/output terminal 230, is subjected to an input process such as conversion to an 8-bit digital signal and band limiting by a spatial filter in an image input/output circuit 232, and is supplied to an input/output bus 234. At the same time, an analog acoustic signal, entering from an acoustic input/output terminal 236, is converted into a 16-bit digital signal by an acoustic input/output circuit 238 and supplied to the input/output bus 234.

The input/output bus 234 is for example a 16-bit bidirectional data bus, and the image data from the image input/output circuit 232 and the acoustic data from the acoustic input/output circuit 238 are recorded in an input/output memory 240 through said bus 234, at a suitable timing by handshake communication. The following description is principally directed to the processing of image data. The input/output memory 240 is composed of a 2-port memory with a capacity of two fields, which can be alternately assigned for data writing and reading by upper addresses for specifying said fields. Such address control enables data writing and reading at the same time. Also an interleaving process at the recording and a deinterleaving process at the reproduction are conducted by address operations of said input/output memory 240, in order to suppress the number of errors in the reproduced image, even in case of a burst error in the record/reproducing system.

The address operations of said input/output memory 240 are conducted in the following manner. When image data of a frame are stored in the input/output memory 240 along the direction of raster scanning, an address generation circuit 244 sends an address to a transfer control circuit 242 to read the data stored in said memory 240. The data readout is however conducted, not in the direction of raster scanning, as in the display format shown in Fig. 12A, but in a direction perpendicular to the direction of raster scanning. The obtained data are subjected to the addition of an outer parity code in an outer-code encoding/decoding circuit 246, of which output data are stored in a record/reproducing memory 250 by a transfer control circuit 248 according to an address received from the address generation circuit 244. Said encoding/decoding circuit 246 is provided with a buffer memory of a predetermined capacity required for encoding/decoding process. The address generation circuit 244 supplies the transfer control circuit 242 with an address for facilitating the encoding in the outer code direction of the recording format shown in Fig. 12B, and also provides the transfer control circuit 248 with a readout address for reading said recording format, including the outer parity code, in the inner code direction.

Thus the transfer control circuit 242 provides the input/output memory 240 with the read-out address from the address generation circuit 244 and a read-out timing signal corresponding to said read-out address, whereby the image data stored in the input/ output memory 240 are read in the sequence of outer encoding in the recording format shown in Fig. 12B, and supplied to the outer-code encoding/decoding circuit 246 through said transfer control circuit 242. Said encoding/decoding circuit 246 calculates the outer code by a known error correction code, such as Reed-Solomon code, adds the obtained parity to the image data from the transfer control circuit 242 and sends the obtained data to the transfer control circuit 248. Said transfer control circuit 248 sends the data train from the encoding/decoding circuit 246 to the data input port of the record/reproducing memory 250, also supplies said memory 250 with the address signal from the address generation circuit 244, as the write-in address, and also with a write-in timing signal, whereby the image data with the added outer parity code are recorded in the record/reproducing memory 250.

The record/reproducing memory 250 is composed also of a 2-port memory. In the present embodiment, the image data of a field are recorded over six tracks with data scramble, and, corresponding to this recording format, said memory 250 has a capacity of (3 x 2) tracks. The data stored in said memory 250 are read in the inner code direction shown in Fig. 12B, in synchronization with clock pulses of the recording process system, and supplied through the record/reproducing bus 252 to an inner-code encoding/decoding circuits 254A, 254B. The write-in and read-out addresses are switched with an offset corresponding to one track, in order to absorb the jitter component of the recording system.

In the present embodiment, the record tracks on the magnetic tape 260 are alternately formed by two magnetic heads 258A, 258B of different azimuth angles, so that the encoding/decoding circuits 254A, 254B, record/reproducing process circuits 256A, 256B and magnetic heads 258A, 258B are constructed in two channels. Said encoding/decoding circuits 254A, 254B calculate inner codes, add the obtained parity to the input data and send the obtained data to the record/reproducing circuits 256A, 256B, which add a synchronization code SYNC and an identification code ID according to the recording format and effect modulation suitable for magnetic recording. The outputs of said circuits 256A, 256B are respectively supplied to the magnetic heads 258A, 258B to effect recording on the magnetic tape 260.

The reproducing operations are conducted in the following manner. The record/reproducing process circuits 256A, 256B demodulate the signals, reproduced from the magnetic tape 260 by the magnetic heads 258A, 258B, and detect the synchronization codes SYNC and identification codes ID. The inner-code encoding/decoding circuits 254A, 254B calculate syndrome, thereby identifying the position and magnitude of error, and correct the error in the unit of inner code block. The error-corrected data are stored in the record/reproducing memory 250 through the bus 252.

The data stored in said record/reproducing memory 250 are read in the encoding direction of outer code, according to the addresses generated by the address generation circuit 244 and the read-out timing signals from the transfer control circuit 248, and supplied, through said transfer control circuit 248, to the outer-code encoding/decoding circuit 246, which calculates the syndrome, identifies the position and magnitude of error and effects error correction in a similar manner as in the case of inner codes. The error-corrected data are supplied through the transfer control circuit 242 to the input/output memory 240 and stored therein according to the addresses generated by the address generation circuit 244.

The data stored in said input/output memory 240 are read to the bus 234 with deinterleaving by address operations, and the image data and the acoustic data are respectively supplied to the image input/output circuit 232 and the acoustic input/output circuit 238, which, through predetermined output processes, supply respectively the image input/output terminal 230 and the acoustic input/output terminal 236 with an analog reproduced image signal and an analog reproduced acoustic signal.

In the above-explained embodiment, the encoding and decoding of error correction codes are conducted in the data transfer between the memories 240 and 250, but the present invention is naturally not limited to such embodiment and may employ, for example, a high-efficiency encoding utilizing the correlation between different data transmitting directions. Also the outer codes alone are added in the data transfer between the memories 240 and 250, but the present invention is not limited to such embodiment and may be so constructed as to add both the outer and inner codes. Also the plural input/output circuits connected to the input/output bus 234 are respectively assigned for image signal and acoustic signal, but there may also be employed other input/output circuits, for example for luminance signal and color signals.

The foregoing description has been limited to a digital VCR, but the present invention is not limited to such embodiment and is likewise applicable to other apparatus such as an optical filing apparatus or an image data transmission apparatus.

As will be easily understandable from the foregoing description, the present embodiment can achieve complex process such as multiple encoding and decoding, without an increase in the access rate of the memories and data buses. It can also easily absorb the difference in transfer rate among different transmission formats.

## Claims

1. An image data processing apparatus comprising:
a first memory (240) for storing image data according to a first format; and
a second memory (250) for storing image data according to a second format different from the first format;
characterized by
a first bus (234) connected to said first memory (240), for passing the image data according to the first format therethrough to and from said first memory (240);
a second bus (252) connected to said second memory (250) for passing the image data according to the second format therethrough to and from said second memory (250);
processing means (242, 244, 246, 248) for converting the image data according to the first format stored in the first memory (240) into the second format, for coding the converted image data, and for transferring the coded converted image data into said second memory (250), wherein said processing means is arranged to not access said first and second memories via said first and second busses.

2. An apparatus according to claim 1, further comprising:
input means (230, 232, 236, 238) for inputting the image data, and for writing the image data into said first memory (240) in the first format.

3. An apparatus according to claim 2, wherein said input means (230, 232, 236, 238) writes the image data through said first bus (234) into said first memory (240).

4. An apparatus according to any preceding claim, further comprising:
output means (256A, 256B) for reading the image data according to the second format from said second memory (250), and for outputting the read image data.

5. An apparatus according to claim 4, wherein
said output means (256A, 256B) comprises:
a record processing circuit for converting the data read out from said second memory (250) into data suitable for recording, and a recording circuit (258A, 258B) for recording on a recording medium the image data outputted from said record processing circuit (256A, 256B).

6. An apparatus according to claim 4, wherein said output means (256A, 256B) is adapted to read the image data according to the second format from said second memory (250) through said second bus (252).

7. An apparatus according to any preceding claim, wherein
said processing means (242, 244, 246, 248) is adapted to convert into the first format the data according to the second format stored in said second memory (250), to decode the data according to the second format, and to transfer the converted data to said first memory (240) said processing means not accessing said first and second memories via said first and second busses.

8. An apparatus according to claim 7, further comprising
reproducing means (256A, 256B, 258A, 258B) for reproducing the image data according to the second format, and for writing the reproduced image data into said second memory (250).

9. An apparatus according to claim 7 or claim 8, wherein
said processing means (242, 244, 246, 248) includes a decoding circuit (246) for decoding the image data to be transferred from said second memory (250) to said first memory (240).

10. An apparatus according to any preceding claim wherein said processing means is adapted to code the converted image data by error correction coding to form an outer parity code.

11. An apparatus according to claim 10 wherein said processing means is adapted to code the converted image data by error correction coding to form an outer parity code and an inner parity code.

12. An apparatus according to claim 9 wherein said processing means is adapted to decode the data according to the second format by error correction decoding using an outer parity code.

13. An apparatus according to claim 12 wherein said processing means is adapted decode the data according to the second format by error correction decoding using an outer parity code and an inner parity code.

14. An image data processing method comprising the steps of:
storing image data according to a first format in a first memory (240) through a first bus (234) connected to said first memory (240);
reading the image data from the first memory;
converting the image data according to the first format stored in said first memory into a second format;
coding the converted image data;
storing the coded converted image data according to the second format in a second memory (250); and
reading the image data according to the second format from said second memory (250) through a second bus (252) connected to said second memory (250) wherein the first reading step, the converting step, the coding step and the storing step do not access said first and second busses.

15. A method according to claim 14 including the steps of reading the image data according to the second format from said second memory (250), and outputting the read image data.

16. A method according to claim 15 wherein the step of outputting the read image data comprises converting the data read out into data suitable for recording, and recording the image data on a recording medium.

17. A method according to any one of claims 14 to 16 including the steps of converting the image data according to the second format stored in said second memory (250) into image data according to said first format, decoding the data according to the second format, and transferring the converted data to said first memory (240) said steps not accessing the first and second busses.

18. A method according to any one of claims 14 to 17 wherein the coding step comprises error correction coding to form an outer parity code.

19. A method according to claim 18 wherein the coding step comprises error correction coding to form an outer parity code and an inner parity code.

20. A method according to claim 17 wherein the decoding step comprises error correction decoding using an outer parity code.

21. A method according to claim 20 wherein the decoding step comprises error correction decoding using an outer parity code and an inner parity code.

## Patentansprüche

1. Bildverarbeitungsgerät, mit:
einem ersten Speicher (240), der Bilddaten nach einem ersten Format speichert; und mit
einem zweiten Speicher (250), der Bilddaten nach einem zweiten Format speichert, das sich vom ersten Format unterscheidet;
gekennzeichnet durch:
einen ersten Bus (234), der mit dem ersten Speicher (240) verbunden ist, um die Bilddaten nach dem ersten Format aus dem ersten Speicher (240) durchzuleiten;
einen zweiten Bus (252), der mit dem ersten Speicher (250) verbunden ist, um die Bilddaten nach dem zweiten Format und aus dem zweiten Speicher (250) durchzuleiten;
Verarbeitungsmitteln (242, 244, 246, 248) zum Umsetzen der im ersten Speicher (240) gespeicherten Bilddaten nach dem ersten Format in das zweite Format, zum Codieren der umgesetzten Bilddaten und zum Transferieren der codierten umgesetzten Bilddaten in den zweiten Bildspeicher (250), wobei das Verarbeitungsmittel eingerichtet ist, nicht auf den ersten und zweiten Speicher über den ersten und zweiten Bus zuzugreifen.

2. Gerät nach Anspruch 1, das des weiteren ausgestattet ist mit:
Eingabemitteln (230, 232, 236, 238) zum Eingeben der Bilddaten und zum Schreiben der Bilddaten im ersten Format in den ersten Speicher (240).

3. Gerät nach Anspruch 2, dessen Eingabemittel (230, 232, 236, 238) die Bilddaten durch den ersten Bus (234) in den ersten Speicher (240) schreibt.

4. Gerät nach einem der vorstehenden Ansprüche, das des weiteren ausgestattet ist mit:
Ausgabemitteln (256A, 256B) zum Lesen der Bilddaten nach dem zweiten Format aus dem zweiten Speicher (250) und zur Ausgabe der gelesenen Bilddaten.

5. Gerät nach Anspruch 4, dessen Ausgabemittel (256A, 256B) ausgestattet sind mit:
einer Aufzeichnungsverarbeitungsschaltung zum Umsetzen der aus dem zweiten Speicher (250) gelesenen Daten in zur Aufzeichnung geeignete Daten, und mit einer Aufzeichnungsschaltung (258A, 258B) zum Aufzeichnen der Bilddaten aus der Aufzeichnungsverarbeitungsschaltung (256A, 256B) auf einen Aufzeichnungsträger.

6. Gerät nach Anspruch 4, dessen Ausgabemittel (256A, 256B) zum Lesen der Bilddaten nach dem zweiten Format durch den zweiten Bus (252) aus dem zweiten Speicher (250) eingerichtet ist.

7. Gerät nach einem der vorstehenden Ansprüche, bei dem
das Verarbeitungsmittel (242, 244, 246, 248) eingerichtet ist zum Umsetzen der im zweiten Speicher (250) gespeicherten Daten nach dem zweiten Format in das erste Format, zum Decodieren der Daten nach dem zweiten Format und zum Übertragen der umgesetzten Daten in den ersten Speicher (240), wobei die Verarbeitungsmittel nicht auf den ersten und zweiten Speicher über den ersten und zweiten Bus zugreifen.

8. Gerät nach Anspruch 7, das des weiteren ausgestattet ist mit:
Wiedergabemitteln (256A, 256B, 258A, 258B) zum Wiedergeben der Bilddaten nach dem zweiten Format und zum Schreiben der wiedergegebenen Bilddaten in den zweiten Speicher (250).

9. Gerät nach Anspruch 7 oder 8, wobei
das Verarbeitungsmittel (242, 244, 246, 248) eine Decodierschaltung (246) zum Decodieren der Bilddaten enthält, die vom zweiten Speicher (250) zum ersten Speicher (240) zu übertragen sind.

10. Gerät nach einem der vorstehenden Ansprüche, bei dem das Verarbeitungsmittel zum Codieren der umgesetzten Bilddaten durch Fehlerkorrekturcodierung zum Erzeugen eines Außen-Paritätscodes eingerichtet ist.

11. Gerät nach Anspruch 10, dessen Verarbeitungsmittel zum Codieren der umgesetzten Bilddaten durch Fehlerkorrekturcodierung eingerichtet ist, um einen Außen-Paritätscode und einen Innen-Paritätscode zu erzeugen.

12. Gerät nach Anspruch 9, bei dem das Verarbeitungsmittel zum Decodieren der Daten nach dem zweiten Format durch Fehlerkorrekturdecodierung unter Verwendung eines äußeren Paritätscodes eingerichtet ist.

13. Gerät nach Anspruch 12, dessen Verarbeitungsmittel zum Decodieren der Daten nach dem zweiten Format durch Fehlerkorrekturdecodierung unter Verwendung eines Außen-Paritätscodes und eines Innen-Paritätscodes eingerichtet ist.

14. Bildverarbeitungsverfahren, mit den Verfahrensschritten:
Speichern von Bilddaten nach einem ersten Format durch einen ersten Bus (234) in einen ersten Speicher (240), der mit dem ersten Speicher (240) verbunden ist;
Lesen der Bilddaten aus dem ersten Speicher;
Umsetzen der im ersten Speicher gespeicherten Bilddaten nach dem ersten Format in ein zweites Format;
Codieren der umgesetzten Bilddaten;
Speichern der codierten, umgesetzten Bilddaten nach dem zweiten Format in einen zweiten Speicher (250); und
Lesen der Bilddaten nach dem zweiten Format für den zweiten Bildspeicher (250) durch einen mit dem zweiten Speicher (250) verbundenen zweiten Bus (252), wobei es im ersten Verfahrensschritt des Lesens, im Verfahrensschritt des Umsetzens, im Verfahrensschritt des Codierens und im Verfahrensschritt des Speicherns keinen Zugriff auf den ersten und zweiten Bus gibt.

15. Verfahren nach Anspruch 14, mit den Verfahrensschritten des Lesens der Bilddaten nach dem zweiten Format aus dem zweiten Speicher (250) und Ausgeben der gelesenen Bilddaten.

16. Verfahren nach Anspruch 15, bei dem der Verfahrensschritt des Ausgebens der gelesenen Bilddaten das Umsetzen der ausgelesenen Daten in zum Aufzeichnen geeignete Daten und Aufzeichnen der Bilddaten auf einen Aufzeichnungsträger umfaßt.

17. Verfahren nach einem der Ansprüche 14 bis 16, mit den Verfahrensschritten des Umsetzens der im zweiten Speicher (250) gespeicherten Bilddaten nach dem zweiten Format in Bilddaten nach dem ersten Format, Decodieren der Daten nach dem zweiten Format und Übertragen der umgesetzten Daten in den ersten Speicher 240, wobei in den Verfahrensschritten kein Zugriff auf den ersten und zweiten Bus erfolgt.

18. Verfahren nach einem der Ansprüche 14 bis 17, bei dem der Verfahrensschritt des Codierens eine Fehlerkorrekturcodierung zum Erzeugen eines Außen-Paritätscodes umfaßt.

19. Verfahren nach Anspruch 18, bei dem der Verfahrensschritt des Codierens eine Fehlerkorrekturcodierung zum Erzeugen eines Außen-Paritätscodes und eines Innen-Paritätscodes umfaßt.

20. Verfahren nach Anspruch 17, bei dem der Verfahrensschritt des Decodierens eine Fehlerkorrekturcodierung unter Verwendung eines Außen-Paritätscodes umfaßt.

21. Verfahren nach Anspruch 20, bei dem der Verfahrensschritt des Codierens eine Fehlerkorrekturdecodierung unter Verwendung eines Außen-Paritätscodes und eines Innen-Paritätscodes umfaßt.

## Revendications

1. Appareil de traitement de données d'image comprenant :
une première mémoire (240) pour stocker des données d'image conformes à un premier format ; et
une deuxième mémoire (250) pour stocker des données d'image conformes à un deuxième format différent du premier format ;
caractérisé par
un premier bus (234) connecté à ladite première mémoire (240), pour le passage dans celui-ci des données d'image conformes au premier format vers ladite première mémoire (240) et en provenance de celle-ci ;
un deuxième bus (252) connecté à ladite deuxième mémoire (250) pour le passage des données d'image conformes au deuxième format dans celui-ci vers ladite deuxième mémoire (250) et en provenance de celle-ci ;
un moyen de traitement (242, 244, 246, 248) pour convertir les données d'image conformes au premier format, stockées dans la première mémoire (240), en le deuxième format, pour coder les données d'image converties, et pour transférer les données d'image converties codées, dans ladite deuxième mémoire (250), dans lequel ledit moyen de traitement est agencé pour ne pas accéder auxdites première et deuxième mémoires par l'intermédiaire desdits premier et deuxième bus.

2. Appareil selon la revendication 1, comprenant en outre :
un moyen d'entrée (230, 232, 236, 238) pour l'introduction des données d'image, et pour l'écriture des données d'image dans ladite première mémoire (240) dans le premier format.

3. Appareil selon la revendication 2, dans lequel ledit moyen d'entrée (230, 232, 236, 238) écrit les données d'image par l'intermédiaire dudit premier bus (234), dans ladite première mémoire (240).

4. Appareil selon l'une quelconque des revendications précédentes, comprenant en outre :
un moyen de sortie (256A, 256B) pour lire les données d'image conformes au deuxième format à partir de ladite deuxième mémoire (250), et pour délivrer les données d'image lues.

5. Appareil selon la revendication 4, dans lequel ledit moyen de sortie (256A, 256B) comprend :
un circuit de traitement d'enregistrement pour convertir les données lues à partir de ladite deuxième mémoire (250) en données appropriées pour un enregistrement, et un circuit (258A, 258B) pour l'enregistrement, sur un support d'enregistrement, des données d'image délivrées par ledit circuit (256A, 256B) de traitement d'enregistrement.

6. Appareil selon la revendication 4, dans lequel ledit moyen de sortie (256A, 256B) est apte à lire les données d'image conformes au deuxième format à partir de ladite deuxième mémoire (250) par l'intermédiaire dudit deuxième bus (252).

7. Appareil selon l'une quelconque des revendications précédentes, dans lequel
ledit moyen de traitement (242, 244, 246, 248) est apte à convertir en le premier format les données conformes au deuxième format stockées dans ladite deuxième mémoire (250), pour décoder les données conformes au deuxième format, et pour transférer les données converties vers ladite première mémoire (240), ledit moyen de traitement accédant auxdites première et deuxième mémoires par l'intermédiaire desdits premier et deuxième bus.

8. Appareil selon la revendication 7, comprenant en outre
un moyen de reproduction (256A, 256B, 258A, 258B) pour reproduire les données d'image conformes au deuxième format, et pour écrire les données d'image reproduites dans ladite deuxième mémoire (250).

9. Appareil selon la revendication 7 ou la revendication 8, dans lequel
ledit moyen de traitement (242, 244, 246, 248) comporte un circuit de décodage (246) pour décoder les données d'image à transférer entre ladite deuxième mémoire (250) et ladite première mémoire (240).

10. Appareil selon l'une quelconque des revendications précédentes, dans lequel ledit moyen de traitement est apte à coder les données d'image converties par codage de correction d'erreur pour former un code de parité extérieur.

11. Appareil selon la revendication 10, dans lequel ledit moyen de traitement est apte à coder les données d'image converties par codage de correction d'erreur pour former un code de parité extérieur et un code de parité intérieur.

12. Appareil selon la revendication 9, dans lequel ledit moyen de traitement est apte à décoder les données conformes au deuxième format par décodage de correction d'erreur en utilisant un code de parité extérieur.

13. Appareil selon la revendication 12, dans lequel ledit moyen de traitement est apte à décoder les données conformes au deuxième format par décodage de correction d'erreur en utilisant un code de parité extérieur et un code de parité intérieur.

14. Procédé de traitement de données d'image comprenant les étapes suivantes :
stockage de données d'image conformes à un premier format dans une première mémoire (240) par l'intermédiaire d'un premier bus (234) connecté à ladite première mémoire (240) ;
lecture des données d'image à partir de la première mémoire ;
conversion des données d'image conformes au premier format, stockées dans ladite première mémoire, en un deuxième format ;
codage des données d'image converties ;
stockage des données d'image converties codées conformes au deuxième format dans une deuxième mémoire (250) ; et
lecture des données d'image conformes au deuxième format à partir de ladite deuxième mémoire (250) par l'intermédiaire d'un deuxième bus (252) connecté à ladite deuxième mémoire (250), dans lequel la première étape de lecture, l'étape de conversion, l'étape de codage et l'étape de stockage n'accèdent pas auxdits premier et deuxième bus.

15. Procédé selon la revendication 14, comportant les étapes de lecture des données d'image conformes au deuxième format à partir de ladite deuxième mémoire (250), et de délivrance des données d'image lues.

16. Procédé selon la revendication 15, dans lequel l'étape de délivrance des données d'image lues comprend une conversion des données lues en données appropriées pour un enregistrement, et un enregistrement des données d'image sur un support d'enregistrement.

17. Procédé selon l'une quelconque des revendications 14 à 16, comportant les étapes de conversion des données d'image conformes au deuxième format, stockées dans ladite deuxième mémoire (250), en données d'image conformes audit premier format, de décodage des données conformes au deuxième format, et de transfert des données converties vers ladite première mémoire (240), lesdites étapes n'accédant pas aux premier et deuxième bus.

18. Procédé selon l'une quelconque des revendications 14 à 17, dans lequel l'étape de codage comprend un codage de correction d'erreur pour former un code de parité extérieur.

19. Procédé selon la revendication 18, dans lequel l'étape de codage comprend un codage de correction d'erreur pour former un code de parité extérieur et un code de parité intérieur.

20. Procédé selon la revendication 17, dans lequel l'étape de décodage comprend un décodage de correction d'erreur utilisant un code de parité extérieur.

21. Procédé selon la revendication 20, dans lequel l'étape de décodage comprend un décodage de correction d'erreur utilisant un code de parité extérieur et un code de parité intérieur.
